Europäisches Patentamt

European Patent Office

Office européen des brevets

(19)

(11) Veröffentlichungsnummer: **0 268 944 B1**

# EUROPÄISCHE PATENTSCHRIFT

(12)

(45) Veröffentlichungstag der Patentschrift: **03.06.92**

(51) Int. Cl.⁵: **G11B 20/14**, G11B 20/10

(21) Anmeldenummer: **87116701.1**

(22) Anmeldetag: **12.11.87**

(54) **Schaltung zur Verarbeitung digitaler Signale.**

(30) Priorität: **21.11.86 DE 3639886**

(43) Veröffentlichungstag der Anmeldung:
**01.06.88 Patentblatt 88/22**

(45) Bekanntmachung des Hinweises auf die
Patenterteilung:
**03.06.92 Patentblatt 92/23**

(84) Benannte Vertragsstaaten:
**AT BE CH DE ES FR GB GR IT LI LU NL SE**

(56) Entgegenhaltungen:
**EP-A- 0 032 232**
**DE-A- 3 130 482**
**US-A- 3 621 140**
**US-A- 4 200 845**
**US-A- 4 373 204**

**PATENT ABSTRACTS OF JAPAN, Band 10,**
**Nr. 80 (P-441)[2137], 29. März 1986; & JP-A-60**
**217 561**

(73) Patentinhaber: **Deutsche Thomson-Brandt GmbH**
**Hermann-Schwer-Strasse 3 Postfach 1307**
**W-7730 Villingen-Schwenningen(DE)**

(72) Erfinder: **Scholz, Werner, Dipl.-Ing.**
**Osterstrasse 20**
**W-3007 Gehrden(DE)**

**Beschreibung**

Die Erfindung betrifft eine Schaltung zur Verarbeitung digitaler Signale, in der aus dem digitalen Eingangssignal ein erstes Taktsignal regeneriert wird. Das Taktsignal wird vorzugsweise für die Decodierung des digitalen Signales benötigt.

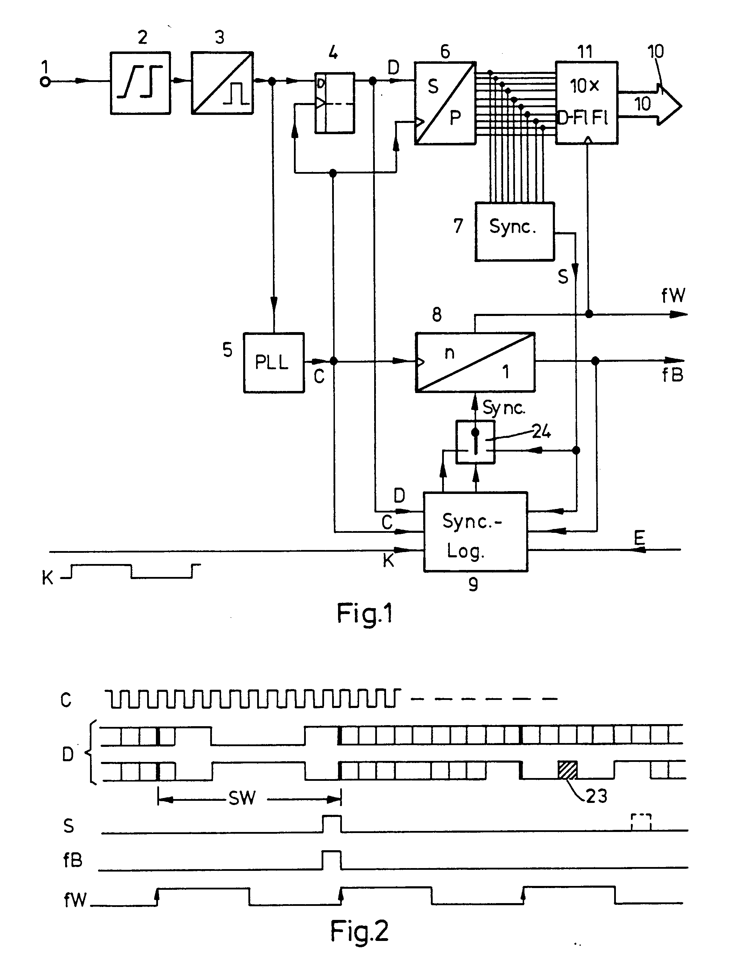

Anhand von Fig. 1 werden zunächst Maßnahmen erläutert, die im allgemeinen am Eingang einer derartigen digitalen Signalverarbeitungsschaltung durchzuführen sind. Das Eingangssignal an der Klemme 1, das von einer Übertragungsstrecke oder einem Aufzeichnungsgerät kommt, wird zunächst in der Entzerrungsschaltung 2 (Equalizer) entzerrt . Danach erfolgt mit Hilfe des Amplitudendetektors (Comparator 3) die Amplitudenentscheidung und mit Hilfe des D-Flip-Flop 4, dessen Takteingang der in der PLL-Schaltung 5 regenerierte Bittakt C zugeführt ist, die Zeitentscheidung.

Die bisher beschriebenen Maßnahmen sind dem jeweils verwendeten Übertragungscode und den Übertragungsverhältnissen anzupassen. Sie dienen dazu, die übertragene Information in Form einer Binärfolge D mit dem zugehörigen Bittakt C verfügbar zu machen.

Für die Weiterverarbeitung muß die Binärfolge D in Abschnitte, sogenannte Datenblocks, unterteilt werden. Dieses erfolgt durch Zählen der Bittakte C. Dazu müssen Zählschaltungen auf eine definierte Zählphase bezüglich der Binärfolge D eingestellt werden.

Zu diesem Zweck dienen Synchronwörter SW, gem. Fig. 2, die in die Binär- folge D eingefügt sind. Die Synchronwörter SW werden meist durch eindeutig erkennbare Bitmuster gebildet.

Normalerweise sind die Synchronwörter SW in regelmäßigen Abständen angeordnet. Bei mit rotierenden Köpfen abgetasteten Signalen ist am Beginn jeder Spur ein Synchronisationsvorgang erforderlich. In der DE-OS 35 33 962 wird ein spezielles Spureinlaufsignal angegeben, mit dem die Synchronisierung mit hoher Sicherheit durchführbar ist.

Die Synchronisationsüberwachung und die bei einem Synchronisationsausfall erforderliche Synchronisierung erfolgen mit Hilfe der am Anfang der Datenblöcke übertragenen Sync-Worte.

Fig. 2 zeigt ein Beispiel für diese Sync.-Worte SW. Es handelt sich hier um Sync-Worte, die im Zusammenhang mit einem 8/10-Übertragungscode in der DE-OS 36 05 396 beschrieben sind. Bei diesen 10-Bit-Sync-Worten sind 9 Bit für die Sync.-Erkennung relevant. Die Erkennung erfolgt in Fig. 1 an den Ausgängen des zur Serien-Parallel-Wandlung dienenden 10-Bit-Schieberegisters 6. Mit dem aus dem Sync-Muster in der Sync-Erkennungsschaltung 7 gewonnenen Impuls S wird der Frequenzteiler 8 für den Bittakt C mit dem Teilerfaktor n in die richtige Zählphase gebracht (n = Anzahl der Bits je Block). Weiter sind dargestellt eine Sync-Logik 9, der von der Kopfumschaltung kommende Kopfumschaltimpuls K und eine den Datenbus 10 speisende Schaltung 11 mit einem D-Flip Flop je Datenbusleitung. Durch Beobachtung des Fehlererkennungssignals E und/oder durch Vergleich des Frequenzteilerausgangssignals fB, das den Blocktakt darstellt, mit den S-Impulsen wird der Zustand der Zählphase überwacht. Bei richtiger Zählphase ist das Signal vom Sync-Eingang des Frequenzteilers 8 zweckmäßigerweise abgeschaltet, da die Wahrscheinlichkeit, daß ein Sync-Signal durch Bitfehler vorgetäuscht wird, verhältnismäßig groß ist. Bei dem in Fig. 2 gezeichneten Signalverlauf kann bereits durch einen Bitfehler 23 das Sync.-Wort vorgetäuscht werden. Der Schalter 24 befindet sich daher bei störungsfreiem Betrieb in der gezeichneten Mittelstellung, so daß dem Frequenzteiler 8 kein Sync.-Impuls zugeführt wird. Am Beginn einer Spur befindet sich der Schalter 24 in der linken Stellung zwecks Zuführung der aus dem Spureinlaufsignal gewonnenen Sync.-Impulse. Bei Feststellung einer Sync.-Störung während der Spur werden dem Frequenzteiler 8 die aus dem Signal gewonnenen Sync.-Impulse zugeführt (rechte Schalterstellung).

Der Frequenzteiler für den Blocktakt fB liefert hier auch den Worttakt fW. Nach Einstellung der richtigen Zählphase können daher mit fW die jeweils zu einem Datenwort gehörenden 10 Bits parallel von den Ausgängen des Schieberegisters 6 mit Hilfe der D-Flip Flops 11 auf den Datenbus 10 getaktet werden.

Besonders bei Aufzeichnungsgeräten treten in unregelmäßigen Abständen Pegeleinbrüche unterschiedlicher Intensität und Dauer im übertragenen Signal auf. Diese Pegeleinbrüche erhöhen die Wahrscheinlichkeit für das Auftreten sogenannter Bit Slips (auch Bit Schlupf genannt) oder Cycle Skips.Während eines stärkeren Pegeinbruchs ist das Eingangssignal der PLL-Schaltung nicht mehr relevant für die Erzeugung des Bittaktes C. Es besteht daher die Möglichkeit, daß während des Pegeleinbruchs eine Differenz zwischen der Zahl der übertragenen Bits und der Anzahl der PLL-Schwingungen entsteht. Danach ist eine Weiterverarbeitung des Signals meist unmöglich, da die Zählschaltungen für die Signalaufteilung nicht mehr in der richtigen Zählphase sind.

Die schnelle Wiederherstellung der richtigen Zählphase ist daher unbedingt erforderlich. Diese schnelle Wiederherstellung ist jedoch auch problematisch.

Zunächst muß erkannt werden, daß überhaupt ein Bit Slip aufgetreten ist. In der Sync.-Schaltung 9 der Fig. 1 werden hierzu das Fehlererkennungssignal E und der aus dem D-Signal abgetrennte Impuls S überwacht. Solange richtige Datenblöcke oder Übereinstimmungen zwischen den Impulsen S und fB vorhanden sind, ist mit hoher Wahrscheinlichkeit kein Bit Slip aufgetreten. Erst wenn diese Kriterien über längere Zeit ausbleiben, kann dies auf ein Bit Slip hindeuten. Ein zu früh vorgenommener Synchronisierversuch kann mehr schaden als nützen, denn ein Sync-Wort kann bereits durch ein falsches Bit 23 vorgetäuscht werden. Dieses wird durch die 2. Zeile des D-Signals in Fig. 2 veranschaulicht. Durch ein vorgetäuschtes Sync-Wort können die Zählschaltungen erst in die falsche Phase versetzt werden. Schließlich muß das wiederholte Ausbleiben korrekter S-Impulse bzw. fehlerfreier Datenblöcke nicht auf ein Bit Slip zurückzuführen sein. Störungen durch Bit Slips bewirken daher längere Ausfälle der Signalverarbeitung.

Der Erfindung liegt die Aufgabe zugrunde, die durch Bit Slips verursachten Unterbrechungen der Signalverarbeitung auf eine möglichst kurze Zeit zu beschränken.

Diese Aufgabe wird durch die im Anspruch 1 beschriebene Erfindung gelöst. Vorteilhafte Weiterbildugnen der Erfindung sind in den Unteransprüchen beschrieben.

Die erfindungsgemäße Lösung beruht auf folgenden Erkenntnissen:

1. Bei den meisten Bit Slips beträgt die Verschiebung der Zählphase nur + - 1 Bit.

2. Die Wahrscheinlichkeit für die Vortäuschung eines Sync-Wortes durch Bitfehler ist in der unmittelbaren Umgebung des Sync-Wortes wesentlich geringer als im übrigen Bereich eines Datenblockes.

3. Bei Magnetbandwiedergabe werden fast alle Bit Slips durch Pegeleinbrüche verursacht.

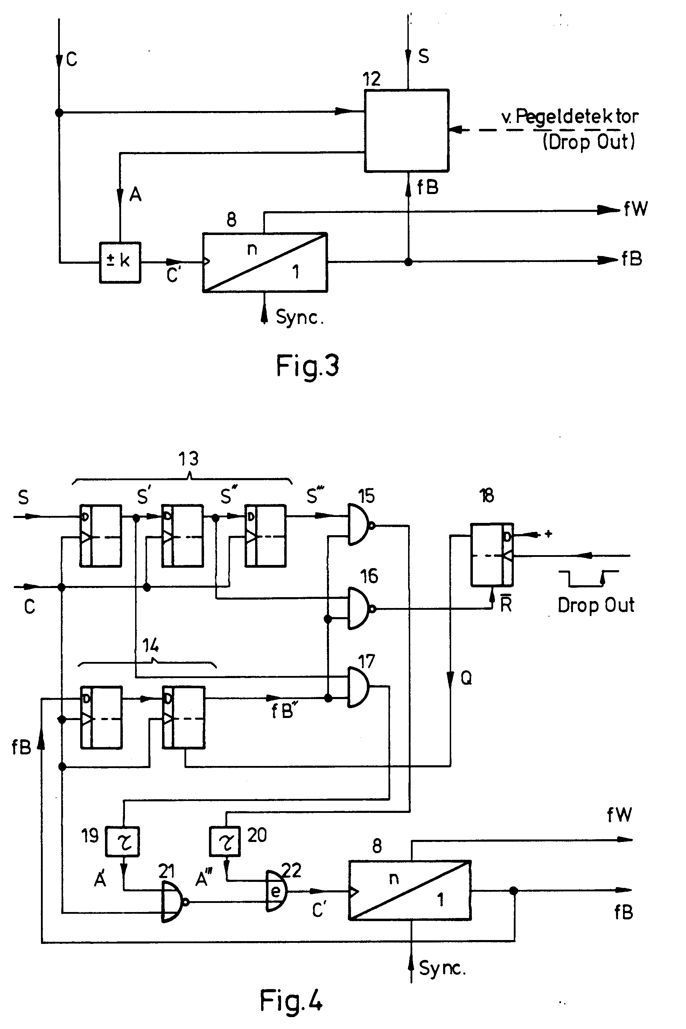

Fig 3 zeigt das Grundprinzip einer Schaltung, die auf diesen Erkenntnissen beruht. Mit der Schaltung können Bit Slips in kürzester Zeit mit hoher Sicherheit erkannt und rückgängig gemacht werden. In der Bit Slip-Logik 12 wird das aus den Sync-Worten gewonnene Signal S mit dem Blocktakt fB verglichen. Diese Schaltung kann ständig arbeiten. Sie kann aber auch unmittelbar nach einem Pegeleinbruch aktiviert werden und wieder in den passiven Zustand übergehen, sobald festgestellt wird, daß zwischen S und fB die Sollphase vorhanden ist.

Die Bit Slip-Logik 12 übt nur dann eine Wirkung aus, wenn festgestellt wird, daß zwischen S und fB ein Phasenfehler von 1 oder wenigen Bits besteht. In diesem Fall wird über die Leitung A die Zählphase des Frequenzteilers 8 im Sinne einer Aufhebung des Phasenfehlers verändert. Dies geschieht im Beispiel nach Fig. 3 dadurch, daß bei einer Phasenabweichung von k bits (vorzugsweise k = 1) k Zählimpulse am Eingang des Frequenzteilers 8 je nach Richtung der Abweichung zugefügt bzw. unterdrückt werden.

Fig. 4 zeigt ein ausführliches Schaltungsbeispiel für k = 1 mit Schaltungsaktivierung am Ende eines Pegeleinbruchs,

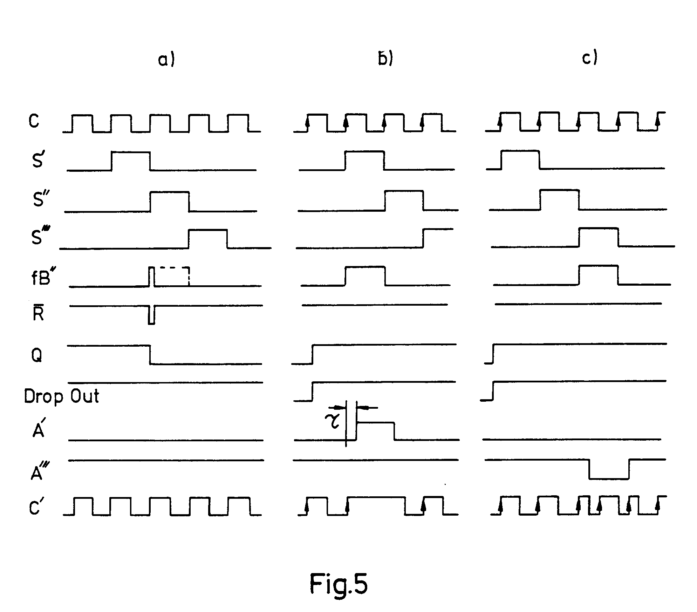

Fig. 5 zeigt die zugehörigen Signalverläufe.

Die Schaltung enthält zwei Schieberegister 13, 14. Das erste Schieberegister 13, macht das Signal S mit drei um jeweils eine Bitdauer versetzten Phasen S′,S″,S‴ verfügbar. Das zweite Schieberegister (14) bringt das Signal fB in eine solche Phasenlage, daß im Synchronzustand der Impuls fB″ mit dem mittleren Impuls S″ übereinstimmt. Drei Gatter 15, 16, 17 überwachen die Phasenlage zwischen S und fB. Bei Feststellung des Synchronzustandes beendet das mittlere Gatter 16 den aktiven Zustand der Schaltung durch Rücksetzen des Flip-Flops 18. das durch die Rückflanke eines Pegeleinbruchmarkierungsimpulses gesetzt wird.

Im aktiven Zustand (Q = High) stellen die Gatter 15, 17 fest, ob eine Phasenverschiebung von plus bzw. minus ein Bit vorhanden ist. In diesem Fall wird ein Impuls A′ bzw. A‴ erzeugt. Diese Impulse sind über Laufzeitglieder 19, 20 gegenüber dem Bittakt C um ca 1/4 Bitdauer verschoben. Sie wirken über ein NOR-Gatter 21 bzw. ein EXOR-Gatter 22 auf den Bittakt C so ein, daß in diesem Takt eine Schwingung unterdrückt bzw. eine zusätzliche Schwingung erzeugt wird. Der auf diese Weise aufbereitete Takt C′ liegt am Eingang des Frequenzteilers 8 zur Erzeugung des Block- und Worttaktes fB und fW. Sofort nach dieser Maßnahme befindet sich der Frequenzteiler 8 in der richtigen Zählphase. Der nächste auswertbare S-Impuls versetzt die Schaltung wieder in den nicht aktivierten Zustand.

Die hier beschriebene Schaltung ist nicht für die normale Synchronisierung am Beginn einer Datenübertragung oder der Signalspur einer Aufzeichnung geeignet. Hierfür sind die herkömmlichen Methoden anzuwenden. Die Bit Slip-Korrekturschaltung kann diese Synchronisiermethoden nicht ersetzen. Sie kann jedoch den Aufwand für die herkömmliche Synchronisierung vermindern. So kann z.B. bei einer Signalabtastung mit rotierenden Köpfen die eigentliche Synchronisierung allein mit Hilfe des Einlaufsignals am Anfang der Spuren gemäß der DE-OS 35 33 962 erfolgen. Synchronisierfehler während der Spur werden durch die Bit Slip-Korrektur vermieden. Da für die Bit Slip-Erkennung nur ein eng begrenzter Bereich in der Umgebung der Sync-Wortes untersucht wird, brauchen die während der Spur aufgezeichneten Sync-Wörter nicht aus Bitmustern zu bestehen, die im übrigen Signal nicht vorkommen. Die Sync-Wörter sollten dagegen so ausgewählt werden, daß die Vortäuschung eines um wenige Bits phasenverschobenen Sync-Wortes durch Bitfehler möglichst unwahrscheinlich ist. Sollte durch Vortäuschung eines in den Grenzen des Korrekturbereiches liegenden phasenverschobenen Sync-Wortes eine Fehlsynchronisierung verursacht werden, dann wurde dieser Fehler mit hoher Wahrscheinlichkeit bereits beim nächsten Sync-Signal wieder behoben werden.

Die herkömmlichen Methoden zur Erkennung und Korrektur von Synchronisierstörungen bei der Verarbeitung digitaler Signale bewirken, daß bei Ausfall der Synchronisierung zusätzlich zu den eigentlich gestörten Datenblöcken auch bitfehlerfreie Datenblöcke geopfert werden müssen.

Will man die Anzahl der geopferten Blöcke möglichst klein halten, dann besteht die Gefahr, daß durch Bitfehler Sync-Worte vorgetäuscht werden und eine Sync-Störung überhaupt erst erzeugt wird.

Die erfindungsgemäße Lösung wird in vielen Fällen die Sync-Störung auf den Zeitbereich der eigentlichen Signalstörung beschränken. Es kann daher zusätzlich zu den herkömmlichen Methoden als Verfahren zur "Vermeidung" von Bit Slips eingesetzt werden. In vielen Fällen wird das Verfahren neben der Störungsverminderung auch eine Verringerung des Aufwandes an herkömmlichen Maßnahmen herbeiführen.

**Patentansprüche**

1. Schaltung zur Verarbeitung digitaler Signale, in der aus dem digitalen Eingangssignal ein erstes Taktsignal (C) regeneriert wird und mit Hilfe von Zählschaltungen (8) aus dem ersten Taktsignal(C) ein oder mehrere Taktsignale tieferer Frequenz (fB, fW) erzeugt werden, wobei letztere Taktsignale durch im digitalen Eingangssignal enthaltene Synchronisierworte in eine vorgegebene Phase bezüglich des Eingangssignals gebracht sind, dadurch gekennzeichnet, daß Logik-Mittel (12) vorgesehen sind die bei Pegeleinbrüchen durch Phasenvergleich der aus den Synchronisierworten gebildeten Synchronsignale (S) mit dem Taktsignal tieferer Frequenz (fB) erkennen, ob eine Verschiebung gegenüber der vorgegebenen Phasenlage um eine Periode oder wenige Perioden des ersten Taktsignals (C) eingetreten ist, und daß Verschiebemittel (19-22) vorgesehen sind, die in diesem Fall im Sinne einer Aufhebung der Verschiebung auf die Zählschaltungen (8) einwirken

2. Schaltung nach Anspruch 1, dadurch gekennzeichnet, daß vor der digitalen Signalverarbeitungsschaltung Mittel zur Erkennung von Pegeleinbrüchen, vorgesehen sind, daß die Logik-Mittel (12) durch die Störungserkennungssignal (E) aktiviert werden, und daß bei Feststellung der richtigen Phasenlage die Logik-Mittel wieder in den nicht aktiven Zustand versetzt werden.

3. Schaltung nach Anspruch 1, dadurch gekennzeichnet, daß die Phasenlage der Synchronsignale durch aus diesen Signalen abgeleitete erste Impulse (S) gekennzeichnet ist, daß die Phasenlage der Zählschaltungen durch von diesen Schaltungen abgegebene zweite Impulse (fB) gekennzeichnet ist, daß mindestens eine der beiden Impulsspannungen (S, fB) auf ein mit dem ersten Taktsignal (C) getaktetes Schieberegister (13,14) gegeben wird, und daß mittels einer Vergleichsschaltung (15,17) durch Vergleich der Impulsspannungen an den Ausgängen der einzelnen Schieberegisterstufen mit der anderen Impulsspannung festgestellt wird, ob die Sollphasenlage herrscht oder eine Phasenverschiebung von ein oder wenigen Perioden des ersten Taktsignals (C) eingetreten ist.

4. Schaltung nach einem oder mehreren der vorhergehenden Ansprüche 1-3, dadurch gekennzeichnet, daß bei Feststellung einer Abweichung von der Sollphasenlage in der Zuführung des ersten Taktsignals (C) zum Eingang der Zählschaltung (8) einzelne Taktperioden je nach Richtung der Abweichung unterdrückt bzw. zugefügt werden.

5. Schaltung nach einem oder mehreren der Ansprüche 1-4, insbesondere für ein in kurze Abschnitte unterteiltes Signal, z.B. bei der Magnetbandwiedergabe mit rotierenden Köpfen, dadurch gekennzeichnet, daß die eigentliche Synchronisation der Zählschaltungen zur Erzeugung der Taktsignale tieferer Frequenz (fB,fW) allein mit Hilfe eines Einlaufsignals zu Beginn jedes Signalabschnittes erfolgt.

6. Verfahren zur Verarbeitung digitaler Signale, in der aus dem digitalen Eingangssignal ein erstes Taktsignal (C) regeneriert wird und mit Hilfe von Zählschaltungen aus dem ersten Taktsignal(C) ein oder mehrere Taktsignale tieferer Frequenz (fB, fW) erzeugt werden, wobei letztere Taktsignale durch im digitalen Eingangssignal enthaltene Synchronisierworte in eine vorgegebene Phase bezüglich des Eingangssignals gebracht sind, dadurch gekennzeichnet, daß bei Pegeleinbrüchen durch Phasenvergleich der aus den Synchronisierworten gebildeten Synchronsignale mit dem Taktsignal tieferer Frequenz (fB) erkannt wird, ob eine Verschiebung gegenüber der vorgegebenen Phasenlage um eine Periode oder wenige Perioden des ersten Taktsignals (C) eingetreten ist, und daß in diesem Fall im Sinne einer Aufhebung der Verschiebung auf die Zählschaltungen eingewirkt wird.

## Claims

1. A circuit for processing digital signals, in which a first clock signal (C) is regenerated from the digital input signal and with the aid of counting circuits (8) one or more clock signals of lower frequency (fB, fW) are produced from the first clock signal (C), in which the latter clock signals are brought into a predetermined phase with respect to the input signal by synchronising words contained in the digital input signal, **characterised in that** logic means (12) are provided which, when there are level drop outs by phase comparison of the sync. signals (5) formed from the synchronising words with the clock signal of lower frequency (fB) recognise whether there has been a shift as compared to the predetermined phase position by a period or a few periods of the first clock signal (C), and that shift means (19-22) are provided which in that case act in the sense of eliminating the shift at the counting circuits (8).

2. A circuit according to claim 1, **characterised in that** means for recognising level drop outs are provided in front of the digital signal processing circuit, that the logic means (12) are activated by the fault recognition signal (E) and that when the correct phase position is established the logic means is put back into the non-active state.

3. A circuit according to claim 1, **characterised in that** the phase position of the sync. signals is characterised by first pulses (S) which are derived from these signals, that the phase position of the counting circuits is characterised by second pulses (fB) emitted by these circuits, that at least one of the two pulse voltages (S, fB) is passed to a shift register (13,14) which is clocked by the first clock signal (C), and that with the aid of a comparison circuit (15,17) by comparing the pulse voltages at the outputs of the individual shift register stages with the other pulse voltage it is established whether the desired phase position is achieved or whether a phase shift of one or a few periods of the first clock signal (C) has occurred.

4. A circuit according to one or more of the preceding claims 1-3, **characterised in that** upon establishment of a deviation from the desired phase position in the supply of the first clock signal (C) to the input of the counting circuit (8) individual clock periods are suppressed or added, depending on the direction of the deviation.

5. A circuit according to one or more of claims 1-4, more particularly for a signal which is subdivided into short portions, for example in magnetic tape playback with rotating heads, **characterised in that** the actual synchronisation of the counting circuits for producing the clock signals of lower frequency (fB, fW) takes place solely with the aid of a run-in signal at the beginning of each signal portion.

6. A method of processing digital signals in which a first clock signal (C) is regenerated from the digital input signal and with the aid of counting circuits one or more clock signals of lower frequency (fB, fW) are produced from the first clock signal (C), in which the latter clock signals are brought into a predetermined phase with respect to the input signal by **characterised in that** when there are level drop outs by phase comparison of the sync. signals formed from the synchronising words with the clock signal of lower frequency (fB) it is recognised whether there has been a shift as compared to the predetermined phase position by a period or a few periods of the first clock signal (C), and that in this case there is activity in the sense of eliminating the shift at the counting circuits.

## Revendications

1. Circuit pour le traitement de signaux numériques dans lequel un premier signal de synchronisation (C) est généré à partir du signal d'entrée numérique et qu'un ou plusieurs signaux de synchronisation de fréquence moins élevée (fB. fW) sont générés à l'aide de circuits de comptage (8) à partir du premier signal de synchronisation (C), ces derniers signaux de synchronisation étant amenés par des mots de synchronisation contenus dans le signal d'entrée numérique dans une phase prédéterminée en ce qui concerne le signal d'entrée, **caractérisé en ce** que des moyens de logique (12) sont prévus qui, lors d'effondrements de niveaux, reconnaissent, en effectuant une comparaison de phase des signaux de synchronisation formés par les mots de synchronisation et du signal de synchronisation de fréquence moins élevée (fB), s'il y a un décalage d'une période ou de quelques périodes du premier signal de synchronisation (C) par rapport à la relation de phase prédéterminée et que des moyens de décalage (19-22) sont prévus qui, dans ce cas, agissent sur les circuits de comptage (8) pour supprimer le décalage.

2. Circuit selon la revendication 1, **caractérisé en ce** que des moyens pour reconnaître les effondrements de niveau sont prévus devant le circuit de traitement de signal numérique, que les moyens de logique (12) sont activés par le signal de reconnaissance de perturbation (E) et que, lorsque la relation de phase correcte est constatée, les moyens de logique sont remis à l'état non actif.

3. Circuit selon la revendication 1, **caractérisé en ce** que la relation de phase des signaux de synchronisation est caractérisée par des premières impulsions (S) dérivées de ces signaux, que la relation de phase des circuits de comptage est caractérisée par des secondes impulsions (fB) délivrées par ces circuits, qu'au moins l'une des deux tensions d'impulsion (5, fB) est donnée sur un registre à décalage (13, 14) synchronisé avec le premier signal de synchronisation (C) et qu'il est constaté, au moyen d'un circuit comparateur (15, 17), par la comparaison des tensions d'impulsion aux sorties des différents étages du registre à décalage et de l'autre tension d'impulsion, s'il y a un décalage de phase d'une ou de quelques périodes du premier signal de synchronisation (C).

4. Circuit selon l'une ou plusieurs des revendications précédentes 1 à 3, **caractérisé en ce** que, lorsqu'il y a constatation d'un écart de la relation de phase nominale dans l'amenée du premier signal de synchronisation (C) à l'entrée du circuit de comptage (8), différentes périodes de synchronisation sont supprimées ou ajoutées selon le sens de l'écart.

5. Circuit selon l'une ou plusieurs des revendications 1 à 4, en particulier pour un signal réparti en courtes sections, par exemple lors de la lecture d'une bande magnétique avec des têtes rotatives, **caractérisé en ce** que la synchronisation proprement dite des circuits de comptage pour générer les signaux de synchronisation de fréquence moins élevée (fB, fW) est uniquement effectuée à l'aide d'un signal d'entrée au début de chaque section de signal.

6. Méthode pour le traitement de signaux numériques dans laquelle un premier signal de synchronisation (C) est régénéré à partir du signal d'entrée numérique et qu'un ou plusieurs signaux de synchronisation de fréquence moins élevée (fB, fW) sont générés à l'aide de circuits de comptage à partir du premier signal de synchronisation (C), ces derniers signaux de synchronisation étant amenés par des mots de synchronisation contenus dans le signal d'entrée numérique dans une phase prédéterminée en ce qui concerne le signal d'entrée, **caractérisé en ce** qu'il est reconnu, lors d'effondrements de niveau, par comparaison de la phase des signaux de synchronisation formés à partir des mots de synchronisation et du signal de synchronisation de fréquence plus basse (fB) s'il y a décalage d'une période ou de quelques périodes du premier signal de synchronisation (C) par rapport à la relation de phase prédéterminée et que, dans ce cas, il y a un effet de suppression du décalage sur les circuits de comptage.

Fig.1

Fig.2

Fig.3

Fig.4

Fig.5